# EUROPÄISCHE PATENTSCHRIFT

(11) **EP 3 432 699 B1**
(45) Veröffentlichungstag und Bekanntmachung des Hinweises auf die Patenterteilung: **01.11.2023**
(21) Anmeldenummer: 17705336.0
(22) Anmeldetag: 10.02.2017
(51) Int. Cl.: A01B 45/02

(54) **BODENBEHANDLUNGSVORRICHTUNG**
GROUND TREATMENT APPARATUS
DISPOSITIF DE TRAITEMENT DE SOL

(30) Priorität: 21.03.2016 DE 102016105248
(43) Veröffentlichungstag der Anmeldung: 30.01.2019
(73) Patentinhaber: Novokraft AG, 4125 Riehen (CH)
(72) Erfinder: HARDMAN, Eric, 4125 Riehen (CH); BÜHRER, Benjamin, 6277 Lieli/LU (CH)
(74) Vertreter: DTS Patent- und Rechtsanwälte Schnekenbühl und Partner mbB
(86) Internationale Anmeldenummer: PCT/EP2017/052964
(87) Internationale Veröffentlichungsnummer: WO 2017/162363

(56) Entgegenhaltungen:
- CA-A1- 2 808 763
- DE-A1- 4 028 996
- GB-A- 2 472 229

## Beschreibung

Die Erfindung betrifft eine Bodenbehandlungsvorrichtung zur Bodenlockerung insbesondere bei Böden mit Rasenbewuchs, speziell Böden von Sport- oder Freizeitanlagen, umfassend eine Trageinrichtung und eine daran gehaltene Halteeinrichtung mit einer Mehrzahl von Injektionselementen, eine Fluidbereitstellungseinrichtung, die mit den Injektionselementen in Fluidverbindung steht, sowie eine Hubeinrichtung, über die die Injektionselemente in den Boden einführbar und aus diesem herausziehbar sind.

Eine derartige Bodenbehandlungsvorrichtung ist beispielsweise in der nicht-vorveröffentlichten Patentanmeldung DE 10 2015 115 991 derselben Anmelderin beschrieben. Die Bodenbehandlungsvorrichtung kommt zur Pflege des Bodens zum Einsatz. Die beispielsweise nadelförmigen Injektionselemente dienen zum Injizieren eines Fluids in den Boden. Durch die Wirkung des Fluids, insbesondere ein Druckgas oder Druckgasgemisch, speziell Druckluft (in diesem Fall wird von Aerifizierung gesprochen), werden eine Lockerung und dadurch eine bessere Belüftung und Bewässerung des Bodens erzielt. Luft und Wasser können besser in den Boden eindringen, und die Drainagewirkung wird verbessert. Bei Böden mit Rasenbewuchs, beispielsweise von Sport- oder Freizeitanlagen, kann sich das Wurzelwerk besser im Erdreich ausbreiten, um das Wachstum zu fördern.

Eine Förderung des Rasenbewuchses durch verbesserte Belüftung, Bewässerung und Lockerung des Bodens ist insbesondere dann wünschenswert, wenn im Boden Rohrleitungen einer Rasenklimatisierungseinrichtung verlegt sind. Eine derartige Rasenklimatisierungseinrichtung ist beispielsweise für eine Sport- oder Freizeitanlage vorgesehen und bei einer vorteilhaften Ausgestaltung oberflächennah verlegt. Die oberflächennahe Verlegung erlaubt eine hohe Energieeffizienz der Rasenklimatisierungseinrichtung, die als Rasenheizeinrichtung und/oder als Rasenkühleinrichtung ausgebildet sein kann. Aufgrund der Temperaturschwankung, beispielsweise infolge einer Erwärmung bei einer Rasenheizung, besteht ein besonderer Bedarf an einer den Rasenbewuchs fördernden Bodenpflege. Vorrichtung zum oberflächennahen Verlegen von Rohren für Rasenklimatisierungseinrichtungen sind beispielsweise in der DE 10 2014 105 577 A1 und in der nicht-vorveröffentlichten Patentanmeldung DE 10 2015 110 547 derselben Anmelderin beschrieben.

Die vorliegende Erfindung wird nachfolgend insbesondere am Beispiel der Anwendung mit einer mit Rasenbewuchs versehenen Sport- oder Freizeitanlage beschrieben, die speziell mit einer Rasenklimatisierungseinrichtung ausgestaltet ist, welche oberflächennah im Boden verlegte Rohrleitungen aufweist. Jedoch ist die vorliegende Erfindung nicht nur auf dieses Anwendungsgebiet beschränkt, auch wenn sie sich hierfür in besonderem Maße eignet. Die Bodenlockerung mittels eines in den Boden injizierten Fluids erweist sich auch bei Böden ohne Rasenklimatisierungseinrichtung als vorteilhaft. Beispielhafte Anwendungen der vorliegenden Erfindung finden sich bei einem Fußballfeld einschließlich dessen Randbereichen (Seiten und Torausbereiche, Coachingzonen...), einem Footballfeld, einem Baseballfeld, einem Golfplatz, der sowohl das Green als auch das Fairway umfassen kann, oder einem Tennisplatz mit Rasenbewuchs. Beispiele für Freizeitanlagen sind Grünanlagen im öffentlichen Bereich, etwa Parkanlagen.

Die gattungsgemäße Bodenbehandlungsvorrichtung kann selbstfahrend oder mittels eines Zugfahrzeuges über die Bodenfläche bewegt werden. Mittels der Hubeinrichtung werden die Injektionselemente abgesenkt, bis sie in den Boden eingreifen. "Hubeinrichtung" schließt daher das Absenken der Injektionselemente mit ein. Über die Injektionselemente wird zur Bodenlockerung ein Fluid injiziert, woraufhin die Injektionselemente mittels der Hubeinrichtung wieder aus dem Boden herausgezogen werden können.

Insbesondere die in der DE 10 2015 115 991 beschriebene Bodenbehandlungsvorrichtung bewährt sich in der Praxis. Dennoch wäre es wünschenswert, eine Bodenbehandlungsvorrichtung bereitzustellen, mit der eine noch wirksamere Lockerung des Bodens erzielt werden kann.

Die GB 2 472 229 A beschreibt eine Bodenbehandlungsvorrichtung, bei der Injektionselemente über einen Exzenterantrieb in den Boden eingeführt und aus diesem herausgezogen werden können. Zwei verschiedenartige Fluide können über die Injektionselemente in den Boden injiziert werden. Das erste Fluid ist Luft, die als Treibmittel für ein zweites Fluid dient, bei dem es sich um ein Gel handeln kann, beispielsweise zum Befeuchten des Bodens. Schlauchleitungen verbinden einen Druckbehälter für Luft mit einem Ventil und das Ventil mit einem jeweiligen Injektionselement. Der Exzenterantrieb umfasst einen Nockenantrieb für die mechanische Betätigung des jeweiligen Ventils.

Aufgabe der vorliegenden Erfindung ist es, eine Bodenbehandlungsvorrichtung der eingangs genannten Art bereitzustellen, die eine bessere Lockerung des Bodens ermöglicht.

Diese Aufgabe wird durch eine erfindungsgemäße Bodenbehandlungsvorrichtung mit den Merkmalen von Anspruch 1 gelöst.

Bei der erfindungsgemäßen Bodenbehandlungsvorrichtung ist vorgesehen, dass eine Mehrzahl von Fluidbehältern zum Einsatz kommt, in denen Fluid vor der Injektion in den Boden gespeichert ist. Jedem Fluidbehälter ist mindestens ein Injektionselement zugeordnet, mit dem der Fluidbehälter in einer wahlweise freigebbaren oder sperrbaren Fluidverbindung steht. Bei abgesenkter Hubeinrichtung und in den Boden eingreifenden Injektionselementen kann die Steuereinrichtung die Auslassventile zum Freigeben der Fluidverbindung ansteuern. Fluid kann in den Boden injiziert werden, um diesen zu lockern. Der Einsatz von einer Mehrzahl von Fluidbehältern erweist sich in der Praxis als vorteilhaft. Die Anforderungen an eine Verrohrung zum Verbinden der Injektionselemente mit einer Mehrzahl von Fluidbehältern lassen sich im Vergleich zur gattungsgemäßen Bodenbehandlungsvorrichtung mit nur einem Vorratsbehälter verringern. Es zeigt sich in der Praxis, dass der Druckaufbau in den Injektionselementen und damit im Boden beim Öffnen der Auslassventile durch Vorsehen einer Mehrzahl von Fluidbehältern verbessert und insbesondere beschleunigt wird.

"Auslassventil" ist vorliegend insbesondere dahingehend zu verstehen, dass Fluid bei geöffnetem Auslassventil aus dem Fluidbehälter über die Fluidverbindung zum mindestens einen Injektionselement strömen kann. Nicht erforderlich ist es, dennoch gleichwohl möglich, dass das jeweilige Auslassventil unmittelbar an einem Auslass des Fluidbehälters angeordnet oder in dessen unmittelbarer Nähe positioniert ist.

Vorliegend sind Positions- und Orientierungsangaben wie beispielsweise "oberhalb", "unterhalb" oder dergleichen auf einen Gebrauchszustand der Bodenbehandlungsvorrichtung bezogen aufzufassen. Dabei nimmt die Bodenbehandlungsvorrichtung insbesondere eine Gebrauchsstellung auf der Bodenfläche ein. Die Bodenbehandlungsvorrichtung wird vorzugsweise in einer Bearbeitungs- oder Hauptbewegungsrichtung bewegt, so dass der Boden an aufeinanderfolgenden Behandlungsbereichen über die wiederholt angehobenen und abgesenkten Injektionselemente gelockert werden kann.

Günstig ist es, dass die Bodenbehandlungsvorrichtung vormontierte Injektionseinheiten aufweist, die jeweils einen Fluidbehälter, ein Auslassventil und ein dem Fluidbehälter zugeordnetes Injektionselement umfassen oder durch diese gebildet sind. Die Injektionseinheiten umfassen einen Fluidbehälter, ein Auslassventil und das ein Injektionselement in starrer Verbindung miteinander. Vormontiert können die Injektionseinheiten bei der Montage der Bodenbehandlungsvorrichtung an der Halteeinrichtung angebracht werden. Günstig ist es dabei, wenn die Injektionseinheiten mit der Halteeinrichtung lösbar verbindbar sind. Eine schadhafte Injektionseinheit kann von der Halteeinrichtung entfernt und durch eine weitere, funktionstüchtige Injektionseinheit ersetzt oder nach Reparatur wieder an der Halteeinrichtung angebracht werden.

Ein jeweiliges Auslassventil weist ein Ventilgehäuse auf, an dessen Eingangsseite der jeweilige Fluidbehälter angeschlossen ist, wobei das jeweilige Injektionselement an eine Ausgangsseite des Ventilgehäuses angeschlossen ist. Über das Ventilgehäuse kann der Fluidbehälter in direkter und unmittelbarer Fluidverbindung mit dem mindestens einen und vorzugsweise nur einen Injektionselement stehen. Dies begünstigt eine kompakte Bauform, wobei die Injektionseinheit aus Fluidbehälter, Auslassventil und Injektionselement bereitgestellt werden kann. Der Fluidbehälter, das Auslassventil und das Injektionselement sind starr miteinander verbunden. Dies vermeidet bewegte Dichtflächen des mindestens einen Injektionselementes und des Fluidbehälters am Auslassventil, so dass eine wirkungsvoll abgedichtete Fluidverbindung vom Fluidbehälter zur Düse bereitgestellt werden kann.

Vorteilhafterweise steht ein jeweiliger Fluidbehälter mit maximal fünf Injektionselementen in Fluidverbindung, vorzugsweise mit maximal drei Injektionselementen. Einem jeweiligen Fluidbehälter können beispielsweise maximal fünf oder maximal drei Injektionselemente zugeordnet sein, die von dem Fluidbehälter bei geöffnetem Auslassventil mit Fluid über die Fluidverbindung beaufschlagt werden.

Bei einer besonders vorteilhaften Ausführungsform der erfindungsgemäßen Bodenbehandlungsvorrichtung steht ein jeweiliger Fluidbehälter mit genau einem Injektionselement in Fluidverbindung. Dementsprechend kann vorgesehen sein, dass einem jeweiligen Fluidbehälter genau ein Injektionselement zugeordnet ist, mit dem der Fluidbehälter in Fluidverbindung steht, wobei selbige mittels eines jeweiligen Auslassventils wahlweise freigegeben und gesperrt werden kann. Jeder Fluidbehälter beaufschlagt nur ein Injektionselement, wodurch sich beispielsweise eine kompakte Bauform des Fluidbehälters, des Auslassventils und des Injektionselementes wie nachfolgend erläutert ergeben kann. Dies begünstigt die Effektivität der Fluidinjektion zu einer besseren Bodenlockerung.

Insbesondere ist vorteilhafterweise jedem Injektionselement der Bodenbehandlungsvorrichtung ein Fluidbehälter zur Beaufschlagung mit Fluid zugeordnet.

Vorteilhafterweise sind oder umfassen die Injektionselemente Rohrleitungen mit endseitig angeordneten Düsen. Ein jeweiliges Injektionselement weist günstigerweise eine starre, geradlinig erstreckte Rohrleitung auf, an der endseitig eine Düse angeordnet ist.

Eine jeweilige Düse eines Injektionselementes kann abgerundet sein, derartige Düsen kommen zum Beispiel bei Natur- und Rollrasen zum Einsatz. Andererseits ist denkbar, dass eine jeweilige Düse spitz und dornförmig ausgestaltet ist. Derartige Düsen können insbesondere zur Behandlung von Böden mit sogenanntem "Hybridrasen" eingesetzt werden, der Kunstrasen und Naturrasen vereint.

Eine jeweilige Düse kann eine oder eine Mehrzahl von Austrittsöffnungen umfassen. In der Praxis erweist es sich als vorteilhaft, wenn mindestens eine nicht-axiale Austrittsöffnung vorgesehen ist, bezogen auf eine Richtung des Injektionselementes. Beispielsweise ist eine Mehrzahl von nicht-axialen Austrittsöffnungen vorgesehen, um im Boden eine "Fluidwolke" in der Umgebung der Düse zu erzeugen.

Als vorteilhaft erweist es sich, wenn ein jeweiliger Fluidbehälter in geradliniger Richtung mit einer Düse am Ausgang des jeweiligen mindestens einen Injektionselementes und insbesondere genau einen Injektionselementes verbunden ist. Ausgehend vom Fluidbehälter kann das Fluid geradlinig bis zur Düse des mindestens einen Injektionselementes strömen. Die Fluidverbindung ist insbesondere frei von Umlenkungen über die Strömungsverbindung vom Fluidbehälter zum mindestens einen Injektionselement. Es zeigt sich, dass dadurch ein zügiger Druckaufbau an der Düse zur zeitlich kurzen und wirkungsvollen Injektion von Fluid in den Boden möglich ist.

Von Vorteil ist es, wenn die Bodenbehandlungsvorrichtung frei von Schlauchleitungen ist zur Verbindung eines jeweiligen Fluidbehälters mit dem jeweiligen mindestens einen Injektionselement. Es zeigt sich in der Praxis, dass eine Vermeidung von Schlauchleitungen förderlich für die Fluidinjektion in den Boden ist. Stattdessen kommen allenfalls starre Fluidleitungen zum Einsatz, wobei eine direkte Verbindung des Fluidbehälters mit dem mindestens einen Injektionselement beispielsweise wie vorstehend erläutert über ein Ventilgehäuse des Auslassventils von Vorteil ist, welches eine starre Fluidleitung ausbildet.

Die Fluidbereitstellungseinrichtung weist vorteilhafterweise mindestens einen Vorratsbehälter und vorzugsweise zwei Vorratsbehälter auf sowie ein Förderaggregat zum Fördern von Fluid in den mindestens einen Vorratsbehälter, wobei der mindestens eine Vorratsbehälter mit den Fluidbehältern über mindestens eine Befüllleitung in Fluidverbindung steht und die Ventileinrichtung mindestens ein Befüllventil umfasst, mit dem die mindestens eine Befüllleitung wahlweise freigebbar und sperrbar ist. Mittels des Förderaggregates kann Fluid in den mindestens einen Vorratsbehälter gefördert werden. Dabei ist das Förderaggregat vorzugsweise für die erforderliche zu injizierende Fluidmenge überdimensioniert. Etwaiger Überschuss an Fluid kann, speziell bei Einsatz eines Gases oder Gasgemisches, ungenutzt entweichen oder abgegeben werden. Der mindestens eine Vorratsbehälter kann zum Speichern von Fluid für spätere Bereitstellung an die Fluidbehälter eingesetzt werden. Dies gibt beispielsweise die Möglichkeit, dass etwaige Schwankungen der bereitgestellten Fluidmenge bei pulsierendem, zyklischen oder periodischen Betrieb des Förderaggregates ausgeglichen werden können. Über die mindestens eine Befüllleitung kann Fluid den Fluidbehältern bei freigegebenem Befüllventil zugeleitet werden.

Die mindestens eine Befüllleitung ist beispielsweise an eine Eingangsseite des jeweiligen Fluidbehälters angeschlossen, die einer Ausgangsseite desselben gegenüberliegt. An die Ausgangsseite ist vorzugsweise das jeweilige Auslassventil angeschlossen.

Die Fluidbehälter der erfindungsgemäßen Bodenbehandlungsvorrichtung können insbesondere als Fluidpuffer oder "Fluidschleusen" angesehen werden. Das im mindestens einen Vorratsbehälter bevorratete Fluid strömt über die mindestens eine Befüllleitung in die Fluidbehälter und kann darin zwischengespeichert werden. Zur Injektion in den Boden werden die Auslassventile geöffnet und das Fluid über die Injektionselemente abgegeben.

Von Vorteil ist es, wenn das mindestens eine Befüllventil von der Steuereinrichtung ansteuerbar ist, wobei die Steuereinrichtung das mindestens eine Befüllventil zum Sperren der mindestens einen Befüllleitung ansteuert, wenn die Auslassventile die Fluidverbindung von den Fluidbehältern zu den Injektionselementen freigeben, und wenn die Steuereinrichtung das mindestens eine Befüllventil zum zumindest zeitweisen Freigeben der mindestens einen Befüllleitung und Beaufschlagen der Fluidbehälter mit Fluid ansteuert, wenn die Auslassventile die Fluidverbindung von den Fluidbehältern zu den Injektionselementen sperren. Nach der Fluidinjektion kann die Steuereinrichtung die Auslassventile in einen Sperrzustand schalten. Die Befüllventile können zum Freigeben der mindestens einen Befüllleitung in einen Freigabezustand geschaltet werden, damit Fluid aus dem mindestens einen Vorratsbehälter in die Fluidbehälter strömen und diese füllen kann.

Das Förderaggregat kann mit dem mindestens einen Vorratsbehälter beispielsweise über mindestens eine Zufuhrleitung in Fluidverbindung stehen.

Das Förderaggregat ist beispielsweise ein Druckluftkompressor, wenn es sich bei dem eingesetzten Fluid um Druckluft handelt.

Das Förderaggregat kann mittels eines Antriebs betrieben werden. Beispielsweise ist ein hydraulischer, mechanischer oder elektrischer Antrieb vorgesehen.

Das Fluid kann ein Gas oder Gasgemisch sein, insbesondere Druckluft. Bei Einsatz von Druckluft wird der Boden aerifiziert.

Alternativ oder ergänzend kann vorgesehen sein, dass das Fluid eine Flüssigkeit ist oder umfasst.

Von Vorteil ist es, wenn die Halteeinrichtung ein Koppelteil aufweist und ein Halteteil, wobei die Halteeinrichtung über das Koppelteil an der Trageinrichtung gehalten und dadurch mit dieser gekoppelt ist und die Injektionselemente am Halteteil gehalten sind.

Günstigerweise umfasst die Bodenbehandlungsvorrichtung eine Verstelleinrichtung, über die das Koppelteil relativ zur Trageinrichtung längs einer Bearbeitungsrichtung der Bodenbehandlungsvorrichtung beweglich ist. Die Verstelleinrichtung, zum Beispiel eine Verschiebeeinrichtung, ermöglicht das Bewegen der Halteeinrichtung über dessen Koppelteil relativ zur Trageinrichtung. Dies erlaubt es insbesondere, eine quasi-kontinuierliche Arbeitsweise der Bodenbehandlungsvorrichtung sicherzustellen, wie sie zum Beispiel in der eingangs genannten und einbezogenen Patentanmeldung DE 10 2015 115 991 beschrieben ist. Dabei kann die Bodenbehandlungsvorrichtung mit vorzugsweise konstanter Geschwindigkeit auf der Bodenfläche bewegt werden. Die Halteeinrichtung kann während der Fluidinjektion ortsfest zum Boden verbleiben, indem sich die Trageinrichtung relativ zur Halteeinrichtung bewegt. Anschließend können die Injektionselemente angehoben und die Halteeinrichtung in der Bearbeitungsrichtung schneller als die Trageinrichtung bewegt werden, woraufhin die Injektionselemente abgesenkt und abermals in den Boden eingeführt werden. Dies gibt die Möglichkeit, sukzessive aufeinanderfolgende Behandlungsbereiche des Bodens mit Fluid zu beaufschlagen und die Bodenfläche flächendeckend abzuarbeiten.

Die Verstelleinrichtung weist günstigerweise eine Führung für die Halteeinrichtung an der Trageinrichtung auf.

Günstig ist es, wenn das Halteteil relativ zum Koppelteil über die Hubeinrichtung anhebbar und absenkbar ist. Die Hubeinrichtung kann ein Bestandteil der Halteeinrichtung sein. Günstigerweise ist am Koppelteil eine Führung für das Halteteil mit den daran gehaltenen Injektionselementen angeordnet.

Vorteilhafterweise kann das Halteteil über die Hubeinrichtung senkrecht abgesenkt und angehoben werden.

Die Hubeinrichtung ist vorteilhafterweise als Verschiebeeinrichtung ausgestaltet.

Es versteht sich, dass die Verstelleinrichtung und die Hubeinrichtung vorteilhafterweise von der Steuereinrichtung ansteuerbar sind.

Bei einer Umsetzung der Bodenbehandlungsvorrichtung in der Praxis erweist es sich als vorteilhaft, wenn die Verstelleinrichtung und/oder die Hubeinrichtung hydraulisch ausgestaltet sind und wenn die Bodenbehandlungsvorrichtung eine Hydraulikpumpe aufweist zum Bereitstellen von Hydraulikflüssigkeit für die Verstelleinrichtung und/oder die Hubeinrichtung.

Alternativ kann vorgesehen sein, dass die Verstelleinrichtung und/oder die Hubeinrichtung pneumatisch, mechanisch oder elektrisch ausgestaltet sind.

Günstigerweise umfassen die Verstelleinrichtung und die Hubeinrichtung jeweils mindestens ein Kolben-Zylinder-Aggregat, das unter hydraulischer Betätigung ausgefahren oder eingefahren werden kann, um die Halteeinrichtung oder das Halteteil zu bewegen.

Die Halteeinrichtung, insbesondere das Halteteil, weist vorteilhafterweise einen Haltekörper auf, an dem die Injektionselemente mittels Fixierteilen festgelegt sind. Hierbei kann insbesondere vorgesehen sein, dass einem jeweiligen Injektionselement ein Fixierteil zugeordnet ist. Der Haltekörper ist insbesondere ein Bestandteil des Halteteils und kann mittels der Hubeinrichtung zum Einführen der Injektionselemente in den Boden abgesenkt bzw. zum Herausziehen der Injektionselemente angehoben werden. Beispielsweise für Wartungszwecke ist es von Vorteil, wenn die Auslassventile und die Fluidbehälter oberhalb des Haltekörpers angeordnet sind. Hierunter kann zum Beispiel verstanden werden, dass die Auslassventile und die Fluidbehälter zu einer der Bodenfläche abgewandten Seite des Haltekörpers angeordnet sind.

Für einen robusten und kompakten Aufbau erweist es sich als vorteilhaft, wenn die Injektionselemente Durchgangsöffnungen des Haltekörpers durchgreifen (beispielsweise Durchbrechungen), wobei ein jeweiliges Injektionselement mit einem Fixierteil an einem Rand einer jeweiligen Durchgangsöffnung festgelegt ist. Das Fixierteil ist zum Beispiel flanschartig am Rand der Durchgangsöffnung festgelegt und mit dem Haltekörper günstigerweise durch lösbare Verschraubung verbunden. Das Injektionselement kann über den Haltekörper und das Fixierteil hinaus in Richtung des Bodens hervorragen.

Günstig ist es, wenn die Injektionselemente entgegen der Rückstellkraft sie vom Haltekörper weg beaufschlagender Rückstellelemente relativ zum Haltekörper verschieblich sind, wobei die Fixierteile eine Führung für die Injektionselemente ausbilden. Beispielsweise dann, wenn ein Injektionselement beim Einführen in den Boden einen übermäßigen Widerstand erfährt - möglich ist hier das Auftreffen auf einen Stein oder eine Rohrleitung einer Rasenklimatisierungseinrichtung -, kann das Injektionselement entgegen der Kraft des Rückstellelementes relativ zum Haltekörper verschoben und dadurch gegen Beschädigung geschützt werden.

Bei der zuletzt erwähnten vorteilhaften Ausführungsform ist ein jeweiliger Fluidbehälter vorzugsweise starr mit einem Auslassventil und dem mindestens einem ihm zugeordneten Injektionselement verbunden, wobei der Fluidbehälter und das Auslassventil zusammen mit dem mindestens einen Injektionselement verschiebbar ist. Beim Verschieben des Injektionselementes wird vorzugsweise auch das Auslassventil und der Fluidbehälter verschoben, so dass eine Zuordnung von nur einem Injektionselement zu einem Fluidbehälter einen besonderen Vorteil aufweist. Die jeweils anderen Injektionselemente können unverrückt bleiben, wenn ein Injektionselement verschoben wird. Etwaige bewegte Dichtflächen lassen sich durch eine starre Verbindung des Fluidbehälters über das Auslassventil mit dem Injektionselement vermeiden. Außerdem können flexible Schlauchleitungen für die Fluidverbindungen eingespart werden.

Das Rückstellelement kann ein Vorspannelement sein, das das Injektionselement mit einer auf den Boden gerichteten Kraft vorspannt. Beispielsweise stützt sich das Rückstellelement an einer jeweiligen Schulter am Injektionselement und am Fixierteil ab.

Die vorstehend erwähnten Injektionseinheiten umfassen vorteilhafterweise ein Fixierteil, das vormontiert an der Injektionseinheit bereitgestellt wird, um die Montage der Bodenbehandlungsvorrichtung zu erleichtern.

Vorteilhafterweise weist die Bodenbehandlungsvorrichtung mindestens einen Anlagekörper zum Anliegen an der Bodenfläche auf, wobei ein jeweiliges Injektionselement einen Anlagekörper durchgreift, und wobei der mindestens eine Anlagekörper mindestens ein Dichtelement umfasst oder ein solches am Anlagekörper angeordnet ist, das das jeweilige Injektionselement einfasst. Bei in den Boden eingreifenden Injektionselementen kann sich die Halteeinrichtung über den mindestens einen Anlagekörper am Boden abstützen. Die Bodenfläche kann dadurch mit einer Kraft beaufschlagt werden, so dass Ausbildungen von Unebenheiten an der Bodenfläche vermieden werden können. Das mindestens eine Dichtelement kann mindestens ein Injektionselement einfassen um zu verhindern, dass das Fluid unerwünschterweise zwischen dem mindestens einen Anlagekörper und der Bodenfläche austritt und stattdessen im Boden verbleibt.

Eine vorteilhafte Ausführungsform der Bodenbehandlungsvorrichtung weist einen Anlagekörper auf, den alle Injektionselemente durchgreifen, sowie ein Dichtelement, das alle Injektionselemente einfasst. Über den Anlagekörper kann sich die Halteeinrichtung flächig auf der Bodenfläche abstützen, und das eine Dichtelement dichtet zwischen der Bodenfläche und dem Anlagekörper.

Das Dichtelement ist vorzugsweise ein zusammendrückbarer oder knautschbarer Dichtwulst.

Der mindestens eine Anlagekörper ist vorteilhafterweise im Abstand zum Haltekörper der Halteeinrichtung positioniert und stützt sich über Stützteile am Haltekörper ab, wobei die Injektionselemente einen Zwischenraum zwischen dem mindestens einen Anlagekörper und dem Haltekörper durchgreifen. Der Zwischenraum ermöglicht beispielsweise die Aufnahme der vorstehend erwähnten Rückstellelemente und von Führungen, die durch die Fixierteile für die Injektionselemente gebildet werden.

Als vorteilhaft kann es sich erweisen, wenn die Injektionselemente nach Einführen in den Boden und vor der Fluidinjektion mittels der Hubeinrichtung anhebbar sind, um einen Freiraum unterhalb der Injektionselemente im Boden zu bilden. Die Injektionselemente können während des Eingreifens in den Boden, bezogen auf die Bearbeitungsrichtung der Bodenbehandlungsvorrichtung, ortsfest am Behandlungsbereich verbleiben. Dies schließt nicht aus, dass sie mit der mindestens einen Antriebseinrichtung nach dem Einführen in den Boden und vor der Fluidinjektion angehoben werden können. Beispielsweise werden die Injektionselemente geringfügig um ungefähr 0,3 cm bis 0,8 cm angehoben. Es zeigt sich in der Praxis, dass aufgrund des entstehenden Freiraumes eine bessere Lockerungswirkung des Bodens erzielt werden kann.

In letzterem Fall kann vorgesehen sein, dass der mindestens eine Anlagekörper nach Absenken der Halteeinrichtung und anfänglichem Abstützen an der Bodenfläche etwas von der Bodenfläche angehoben wird. Das mindestens eine Dichtelement kann zwischen der Bodenfläche und dem Anlagekörper auch in diesem Fall eine Abdichtung sicherstellen.

Als günstig erweist es sich, wenn der Haltekörper und/oder der mindestens eine Anlagekörper zumindest bereichsweise und bevorzugt vollständig plattenförmig ausgestaltet sind.

Für eine vorteilhafte und zuverlässige Bodenlockerung, insbesondere bei Aerifizierung von Sportanlagen wie Fußballfeldern, erweist es sich als vorteilhaft, wenn die Steuereinrichtung die Auslassventile gemäß zumindest einem der Folgenden ansteuert:
- Ausführen nur eines Fluidstoßes durch die Injektionselemente;
- Freigabe der Fluidverbindung für ungefähr 0,05 s bis 0,5 s, vorzugsweise ungefähr 0,1 s bis 0,2 s.

Bevorzugt wird der jeweilige Fluidbehälter nicht entleert, sondern es verbleibt eine Restmenge an Fluid, günstigerweise mit Überdruck bezüglich des Umgebungsdruckes.

Günstigerweise weisen die Fluidbehälter ein Volumen von ungefähr 0,25 I bis 2 I auf, vorzugsweise von ungefähr 0,5 I bis 1,5 I. Für den Einsatz der Bodenbehandlungsvorrichtung an einer Sportanlage wie einem Fußballfeld hat sich ein Volumen der Fluidbehälter von ungefähr 1 I als besonders vorteilhaft erwiesen.

Die Fluidbereitstellungseinrichtung ist günstigerweise derart ausgestaltet, dass ein Fluiddruck von ungefähr 5 bar bis 10 bar in den Fluidbehältern bereitstellbar ist, vorzugsweise ungefähr 7 bar bis 8 bar. Der Injektionsdruck ist beispielsweise ebenso groß.

Bezogen auf den Außendruck im Boden kann die Menge an injiziertem Fluid, insbesondere Druckluft, beispielsweise 2l bis 4l betragen.

Eine vorteilhafte Ausführungsform der erfindungsgemäßen Bodenbehandlungsvorrichtung weist gemäß einem regelmäßigen Muster positionierte Injektionselemente auf. Beispielsweise definieren die Injektionselemente ein hexagonales Muster und sind in Reihen mit jeweils einer Mehrzahl von seitlich nebeneinander positionierten Injektionselementen an der Halteeinrichtung angeordnet, wobei benachbarte Reihen auf Lücke stehende Injektionselemente aufweisen. Beispielsweise sind vier Reihen mit sechs/sieben/sechs/sieben jeweils seitlich nebeneinanderliegenden Injektionselementen vorhanden.

Der Abstand von Injektionselementen zueinander kann beispielsweise ungefähr 15 cm bis 50 cm und typischerweise ungefähr 25 cm betragen.

Die Einführtiefe der Injektionselemente in den Boden ist vorzugsweise einstellbar und veränderbar.

Wie eingangs erwähnt kann die Bodenbehandlungsvorrichtung eine Kupplungseinrichtung zum Anschließen an ein Zugfahrzeug umfassen. Mindestens ein Antrieb der Bodenbehandlungsvorrichtung kann durch das Zugfahrzeug antreibbar sein. Beispielsweise wird eine Hydraulikpumpe der Bodenbehandlungsvorrichtung über eine von dem Zugfahrzeug antreibbare Zapfwelle angetrieben.

Alternativ oder ergänzend kann vorgesehen sein, dass die Bodenbehandlungsvorrichtung selbstfahrend und selbstlenkend ausgestaltet ist. Die Bodenbehandlungsvorrichtung kann ein von der Steuereinrichtung ansteuerbares Fahrwerk mit einem Fahrantrieb aufweisen, so dass der Boden autonom bearbeitet werden kann.

Die nachfolgende Beschreibung einer vorteilhaften Ausführungsform der Erfindung dient im Zusammenhang mit der Zeichnung der näheren Erläuterung der Erfindung. Es zeigen:
- Figur 1:: eine perspektivische Darstellung einer erfindungsgemäßen Bodenbehandlungsvorrichtung;
- Figur 2:: eine Darstellung entsprechend Figur 1, wobei eine Seitenwand der Bodenbehandlungsvorrichtung ausgeblendet ist;
- Figur 3:: eine vergrößerte perspektivische Teildarstellung der Bodenbehandlungsvorrichtung in Blickrichtung des Pfeiles "3" in Figur 2, wobei eine Halteeinrichtung mit Fluidbehältern, Auslassventilen und Injektionselementen dargestellt ist;
- Figur 4:: eine Seitenansicht der Halteeinrichtung in Blickrichtung des Pfeiles "4" in Figur 3 unter Ausblendung einiger Bauteile;
- Figur 5:: eine perspektivische Darstellung einer Injektionseinheit der Bodenbehandlungsvorrichtung mit einem Fluidbehälter, einem Auslassventil, einem Injektionselement und einem Fixierteil sowie eine schematische Teildarstellung eines Haltekörpers;
- Figur 6:: ein schematisches, vereinfachtes Schaltbild der Bodenbehandlungsvorrichtung; und
- Figur 7:: eine Seitenansicht einer Düse eines Injektionselementes der Bodenbehandlungsvorrichtung.

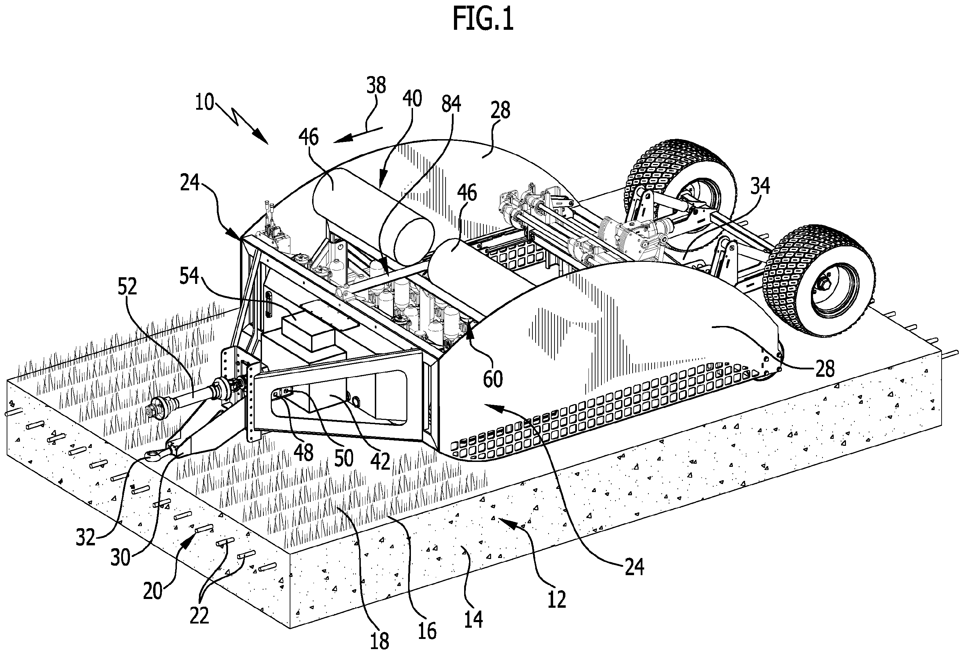

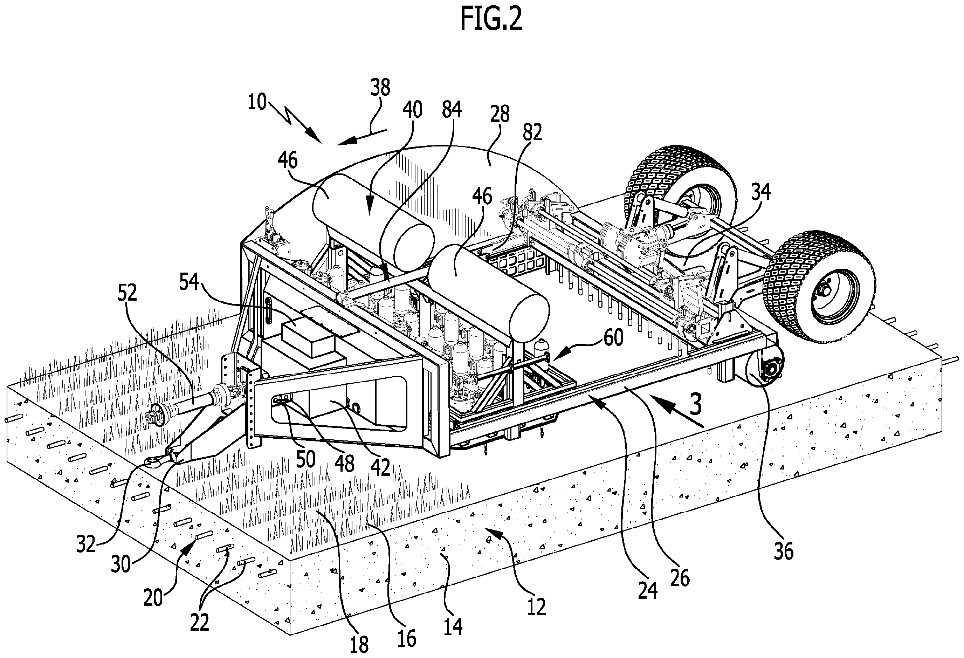

Die Figuren 1 und 2 zeigen eine perspektivische Darstellung einer mit dem Bezugszeichen 10 belegten vorteilhaften Ausführungsform einer erfindungsgemäßen Bodenbehandlungsvorrichtung, nachfolgend zur Vereinfachung als Vorrichtung 10 bezeichnet.

Ferner ist ein von der Vorrichtung 10 zu behandelnder Boden 12 dargestellt, zu dem Erdreich 14 und eine dieses bedeckende Bodenfläche 16 gehören. Der Boden 12 weist einen Rasenbewuchs 18 auf. Bei dem Boden 12 handelt es sich beispielsweise um den Boden einer Sport- oder Freizeitanlage, insbesondere eines Fußballfeldes. Dementsprechend kann der Rasenbewuchs 18 ein Rollrasen sein, jedoch ist auch ein Einsatz der Vorrichtung 10 mit Hybridrasen denkbar.

Im Boden 12 ist eine Rasenklimatisierungseinrichtung 20 verlegt, die eine Mehrzahl von Rohrleitungen 22 umfasst. Die Rohrleitungen 22 sind vorzugsweise oberflächennah und zum Beispiel unter Einsatz einer Vorrichtung verlegt, wie sie in der DE 10 2014 105 577 A1 oder in der nicht-vorveröffentlichten DE 10 2015 110 547 beschrieben sind. Die Rasenklimatisierungseinrichtung 20 ist insbesondere eine Rasenheizeinrichtung, so dass sich die Rohrleitungen 22 im Betrieb aufheizen. Dies kann zum Austrocknen des Bodens 12 führen.

Zur Pflege des Bodens 12 und zur Förderung des Rasenbewuchses 18 ist die Vorrichtung 10 vorgesehen, mit der eine vorteilhafte Bodenlockerung, eine verbesserte Bodenbelüftung, Bewässerung und Drainagewirkung erzielt werden kann. Dadurch kann sich das Wurzelwerk des Rasenbewuchses 18 zur Förderung des Wachstums besser im Boden 12 ausbreiten.

Es wird darauf hingewiesen, dass die vorliegende Erfindung nicht auf die Anwendung an einem Boden der beschriebenen Art beschränkt ist, dies dient nur der besseren Erläuterung der Erfindung.

Die Vorrichtung 10 umfasst eine Trageinrichtung 24, die einen Tragrahmen 26 aufweist. Der Tragrahmen 26 ist beispielsweise aus miteinander verbundenen Längs- und Querträgern und/oder weiteren Bauteilen gebildet. Vorliegend umfasst die Trageinrichtung 24 auch Seitenwände 28, von denen in Figur 2 eine linke Seitenwand 28 ausgeblendet ist.

An einer Vorderseite 30 ist an der Trageinrichtung 24 eine Kupplungseinrichtung 32 angeordnet, über die die Vorrichtung 10 an ein in der Zeichnung nicht dargestelltes Zugfahrzeug angekuppelt werden kann. Nahe oder an einer Rückseite 34 ist am Tragrahmen 26 ein Auflageelement gehalten, vorliegend in Gestalt einer Walze 36. Über die Walze 36 kann die Vorrichtung 10 auf der Bodenfläche 16 aufliegen.

Positions- und Orientierungsangaben wie "Vorderseite", "Rückseite", "oben", "unten" oder dergleichen sind vorliegend auf einen Gebrauchszustand der Vorrichtung 10 bezogen aufzufassen. Dabei liegt die Vorrichtung 10 mit der Walze 36 auf der Bodenfläche 16 und mit der Kupplungseinrichtung auf dem Zugfahrzeug auf und kann in einer Bearbeitungsrichtung 38 über den Boden 12 bewegt werden. Diese fällt mit einer Längsrichtung der Vorrichtung 10 zusammen.

Zur Lockerung des Bodens 12 wird bei der Vorrichtung 10 ein Fluid eingesetzt, wobei es sich vorliegend um ein Gas oder Gasgemisch und insbesondere um Druckluft handelt. Die Vorrichtung 10 ist daher eine Aerifizierungsvorrichtung.

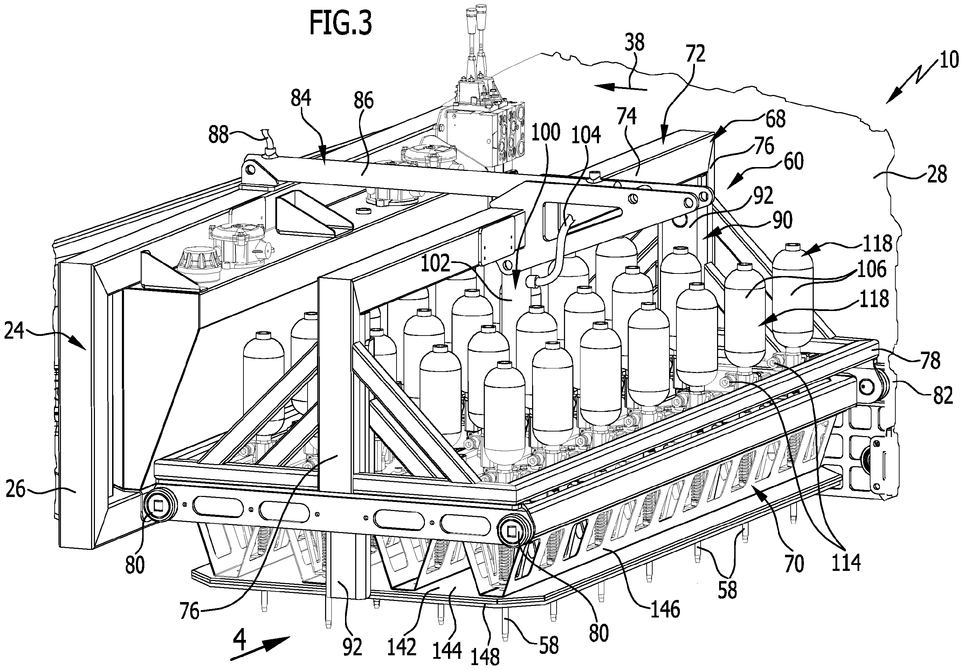

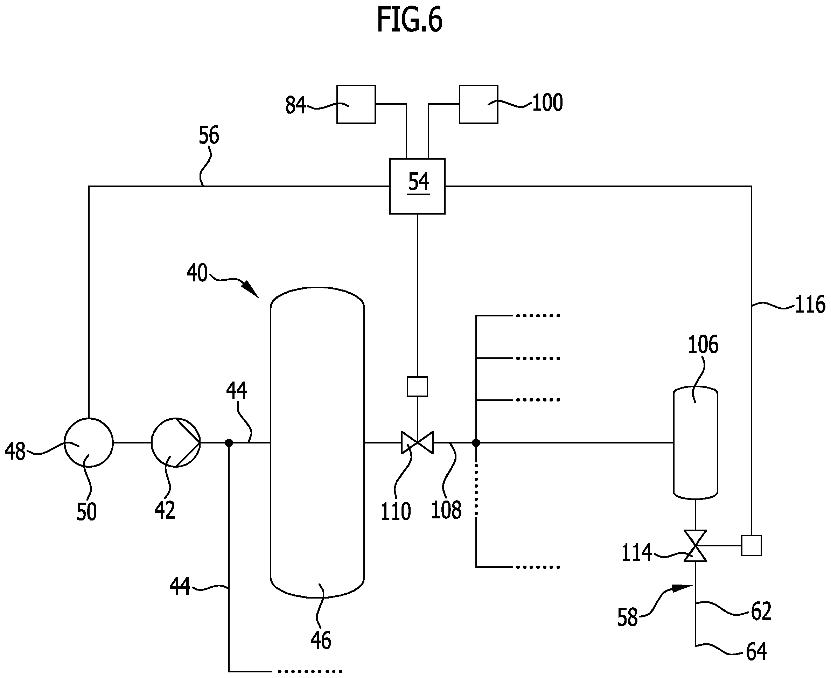

Zur Bereitstellung von Druckluft umfasst die Vorrichtung 10 eine Fluidbereitstellungseinrichtung 40. Die Fluidbereitstellungseinrichtung 40 weist ein Förderaggregat 42 auf, vorliegend einen Luftkompressor. Umgebungsluft wird verdichtet und über eine jeweilige Zufuhrleitung 44 Vorratsbehältern 46 der Fluidbereitstellungseinrichtung 40 zugeführt. Vorliegend sind zwei Vorratsbehälter 46 und zwei Zufuhrleitungen 44 vorgesehen, wobei das schematische Schaltbild von Figur 6 nur einen Vorratsbehälter 46 zeigt und diese in Figur 3 ausgeblendet sind.

Das Förderaggregat 42 wird mittels eines Antriebes 48 angetrieben (z.B. durch Anflanschen), der vorliegend eine Hydraulikpumpe 50 aufweist. Der Antrieb 48 seinerseits wird mittels einer Welle 52 angetrieben. Die Welle 52 ist eine Zapfwelle, die vom Zugfahrzeug angetrieben werden kann. Die Hydraulikpumpe 50 ist vorzugsweise in ihrem Betriebspunkt von einer Steuereinrichtung 54 der Vorrichtung 10 über eiane Steuerleitung 56 ansteuerbar.

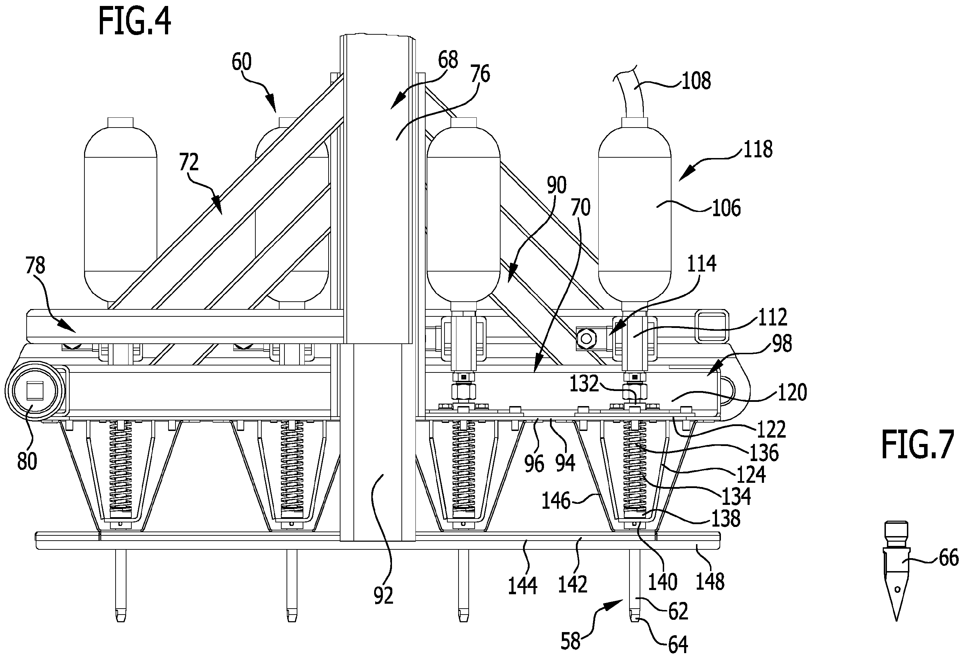

Zur Injektion von Druckluft in den Boden 12 umfasst die Vorrichtung 10 eine Mehrzahl von Injektionselementen 58, die auf nachfolgend noch erläuterte Weise an einer Halteeinrichtung 60 der Vorrichtung 10 gehalten sind. Die Injektionselemente 58 umfassen jeweils eine starre und geradlinig erstreckte Rohrleitung 62 sowie eine endseitig an dieser angeordnete Düse 64. Während die Figuren 3 bis 5 abgerundete Düsen 64 zeigen, stellt Figur 7 eine alternativ verwendbare Düse 66 dar. Die abgerundeten Düsen 64 kommen üblicherweise bei Rollrasen oder Naturrasen zum Einsatz. Die Düsen 66 können demgegenüber vorteilhafterweise mit einem Hybridrasen eingesetzt werden.

Die Halteeinrichtung 60 weist ein Koppelteil 68 zum Haltern an der Trageinrichtung auf sowie ein Halteteil 70 zum Haltern der Injektionselemente 58. Wie insbesondere aus den Figuren 2 und 3 deutlich wird, umfasst oder bildet das Koppelteil 68 einen Rahmen 72 mit einem oberen Querträger 74 und Vertikalträgern 76. An den Vertikalträgern 76 ist ein aus Längs- und Querträgern aufgebauter horizontaler Rahmen 78 gehalten. Führungsglieder in Gestalt von Rollen 80 können in vom Tragrahmen 26, nämlich dessen beiden Längsträgern, gebildete Führungen 82 eingreifen.

Orientierungsangaben wie beispielsweise "horizontal" und "vertikal" sind auf eine Ausrichtung und Justage der Vorrichtung 10 derart aufzufassen, dass bei als horizontal angenommener Bodenfläche 16 eine horizontale Ausrichtung der Längs- und Querträger des Tragrahmens 26 und damit und eine vertikale Ausrichtung der Injektionselemente 58 erfolgt.

Die Vorrichtung 10 umfasst eine Verstelleinrichtung 84, vorliegend ausgestaltet als Verschiebeeinrichtung, um die Halteeinrichtung 60 längs der Bearbeitungsrichtung 38 zu verschieben. Zu diesem Zweck weist die Verstelleinrichtung 84 ein Kolben-Zylinder-Aggregat 86 auf, das vorliegend am Tragrahmen 26 und am oberen Querträger 74 angreift. Dem Kolben-Zylinder-Aggregat 86 kann mittels der Hydraulikpumpe 50 über eine Hydraulikleitung 88 eine Hydraulikflüssigkeit zugeführt werden, oder diese kann dem Kolben-Zylinder-Aggregat 86 entzogen werden. Durch eine Längenänderung des Kolben-Zylinder-Aggregates 86 kann die Halteeinrichtung 60 über das Koppelteil 68, an dessen Rahmen die Kraft eingreift, relativ zur Trageinrichtung 24 verschoben werden. Dabei wird auch das Halteteil 70 mit den daran gehaltenen Injektionselementen 58 verschoben.

Die Verstelleinrichtung 84 kann von der Steuereinrichtung 54 angesteuert werden.

Das Halteteil 70 weist einen Rahmen 90 auf, der vom Rahmen 72 des Koppelteils 68 eingefasst ist und an diesem höhenverstellbar gehalten ist. Der Rahmen 90 umfasst Vertikalträger 92, die über in der Zeichnung nicht dargestellte Rollen an den Vertikalträgern 76 verschiebbar sind, wobei diese eine Führung für die Vertikalträger 92 ausbilden. Weiter umfasst der Rahmen 90 einen an den Vertikalträgern 92 festgelegten Haltekörper 94. Der Haltekörper 94 ist vorliegend weitgehend plattenförmig ausgestaltet mit einer Platte 96, die vom horizontalen Rahmen 78 des Koppelteils 68 seitlich umgeben ist.

Die Vorrichtung 10 umfasst eine Hubeinrichtung 100, die als Verschiebeeinrichtung ausgestaltet ist und ein Kolben-Zylinder-Aggregat 102 umfasst. Das Kolben-Zylinder-Aggregat 102 greift über den oberen Querträger 74 am Koppelteil 68 und über den Haltekörper 94 am Halteteil 70 an. Über eine Hydraulikleitung 104 kann dem Kolben-Zylinder-Aggregat 102 Hydraulikflüssigkeit zugeführt oder diesem entzogen werden. Als Antrieb hierfür dient die Hydraulikpumpe 50, wobei auch die Hubeinrichtung 100 von der Steuereinrichtung 54 ansteuerbar ist. Durch eine Längenänderung des Kolben-Zylinder-Aggregates 102 kann der Haltekörper 94 und damit das Halteteil 70 angehoben und abgesenkt werden. Dadurch können auch die Injektionselemente 58 angehoben und abgesenkt werden.

Die Ansteuerung der Verstelleinrichtung 84 und der Hubeinrichtung 100 durch die Steuereinrichtung 54 ist in Figur 6 schematisch dargestellt und erfolgt beispielsweise, indem diese in der Zeichnung nicht dargestellte Ventile in den Hydraulikleitungen 88, 104 oder weiteren, nicht dargestellten Hydraulikleitungen so schaltet, dass die Kolben-Zylinder Aggregate 86, 102 wahlweise mit Hydraulikflüssigkeit beaufschlagt oder Hydraulikflüssigkeit diesen entzogen wird.

Die Vorratsbehälter 46 sind an der Halteeinrichtung 60 gehalten. Dabei sind die Vorratsbehälter 46 insbesondere am oberen Querträger 74 zu beiden Seiten des Kolben-Zylinder-Aggregates 86 festgelegt.

Die in den Vorratsbehältern 46 bevorratete Druckluft wird vor der Injektion in den Boden 12 zwischengespeichert. Zu diesem Zweck weist die Vorrichtung 10 eine Mehrzahl von Fluidbehältern 106 auf. Erfindungsgemäß ist jedem Fluidbehälter 106 mindestens eines der Injektionselemente 58 zugeordnet, das mit dem jeweiligen Fluidbehälter 106 in wahlweise freigebbarer oder sperrbarer Fluidverbindung steht.

Bei der vorteilhaften erfindungsgemäßen Ausführungsform der Vorrichtung 10 ist sogar vorgesehen, dass die Anzahl der Fluidbehälter 106 gleich der Anzahl der Injektionselemente 58 ist. Jedem Fluidbehälter 106 ist ein Injektionselement 58 zugeordnet, wobei umgekehrt jedem Injektionselement 58 ein Fluidbehälter 106 zugeordnet ist. Der jeweilige Fluidbehälter 106 steht mit einem der Injektionselemente 58 in Fluidverbindung.

Die Vorrichtung 10 umfasst vorliegend 26 Injektionselemente 58, die in vier längs der Bearbeitungsrichtung 38 hintereinanderliegenden Reihen zu sechs/sieben/sechs/sieben Injektionselementen gruppiert sind. Benachbarte Reihen von Injektionselementen stehen auf Lücke zueinander, so dass die Injektionselemente 58 gemäß einem von ihnen definierten hexagonalen Muster und gleichmäßig voneinander beabstandet positioniert sind. Der jeweilige Abstand beträgt ungefähr 25 cm.

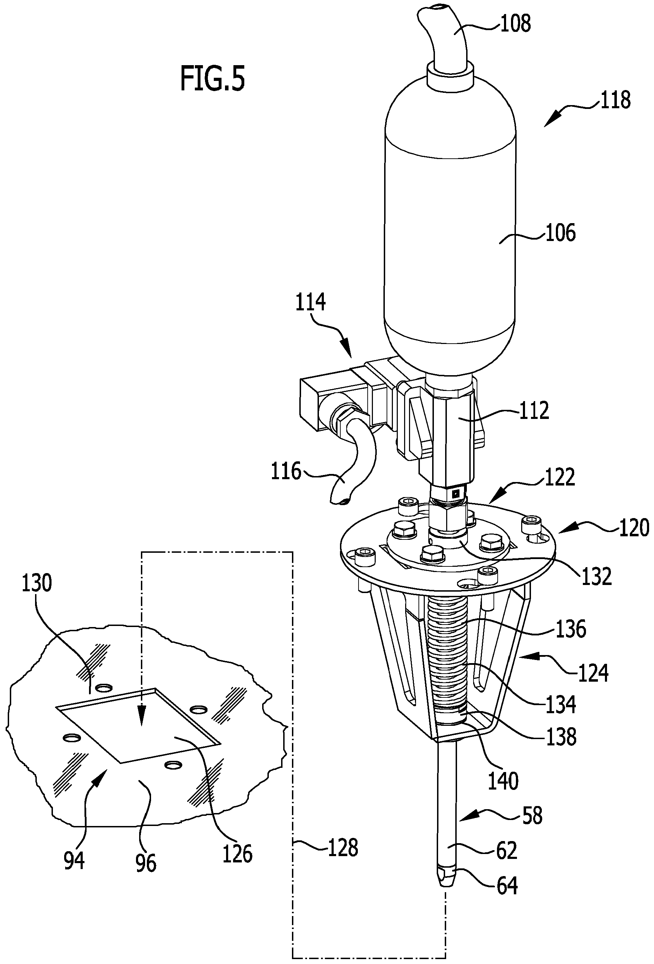

Jeder Vorratsbehälter 46 steht mit der Hälfte der Fluidbehälter 106 und dementsprechend mit 13 Fluidbehältern 106 in Fluidverbindung. Zu diesem Zweck weist die Fluidbereitstellungseinrichtung 40 sich verzweigende Befüllleitungen 108 vorgesehen, wobei ausgangsseitig eines Vorratsbehälters 46 ein Befüllventil 110 vor der jeweiligen Verzweigung der Befüllleitung 108 in 13 Einzelleitungen geschaltet ist. Das Befüllventil 110 ist von der Steuereinrichtung 54 ansteuerbar, so dass die Befüllleitungen 108 wahlweise freigegeben oder gesperrt werden können. Figur 6 zeigt schematisch den Anschluss eines Fluidbehälters 106, wobei in den Figuren 5 und 6 abschnittsweise eine Befüllleitung 108 dargestellt ist.

Nachfolgend wird insbesondere unter Verweis auf die Figuren 4 und 5 auf die Halterung der Injektionselemente 58 und der Fluidbehälter 106 an der Halteeinrichtung 60 eingegangen. Aufgrund identischer Ausgestaltung wird dabei nur auf ein jeweiliges Exemplar eingegangen, das zusammen mit anderen Komponenten der jeweiligen Injektionseinheit 118 in Figur 5 dargestellt ist.

Wie erwähnt, besteht eine Fluidverbindung zwischen dem Fluidbehälter 106 und dem Injektionselement 58. Vorliegend wird die Fluidverbindung dadurch gebildet, dass ausgangsseitig am Fluidbehälter 106 ein Ventilgehäuse 112 eines Auslassventils 114 angeschlossen ist. Umgekehrt ist der Fluidbehälter 106 an die Eingangsseite des Ventilgehäuses 112 angeschlossen. Die Befüllleitung 108 ist an einer dem Auslassventil 114 gegenüberliegenden Seite an den Fluidbehälter 106 angeschlossen. An die Ausgangsseite des Ventilgehäuses 112 ist die Rohrleitung 62 des Injektionselementes 58 angeschlossen.

Der Fluidbehälter 106 ist dadurch in geradliniger Richtung mit der Düse 64 verbunden. Die Verbindung des Fluidbehälters 106, des Auslassventils 114 und des Injektionselementes 58 ist starr. Druckluft kann bei geöffnetem Auslassventil 114 vom Fluidbehälter 106 geradlinig zur Düse 64 strömen. Es sind insbesondere keine Umlenkungen zum Umlenken der Druckluft und keine Schlauchleitungen zur Ausbildung der Fluidverbindung vom Fluidbehälter 106 zum Injektionselement 58 vorgesehen.

Die Ausbildung einer geradlinigen Strömung der Fluidverbindung vom Fluidbehälter 106 zur Düse 64 und der starre Aufbau ermöglichen, dies zeigt sich in der Praxis, bei geöffnetem Auslassventil 114 einen raschen und vorteilhaften Druckaufbau. Der Druck wird nicht in etwaige Verformungsarbeit beispielsweise zum Verformen von Schlauchleitungen umgesetzt. Stattdessen wird sichergestellt, dass die Menge an im Fluidbehälter 106 gespeicherter Druckluft zur wirkungsvollen Aerifizierung des Bodens 12 eingesetzt werden kann.

Das Auslassventil 114 ist über eine Steuerleitung 116 mit der Steuereinrichtung 54 verbunden, so dass die Fluidverbindung vom Fluidbehälter 106 zum Injektionselement 58 wahlweise freigegeben und gesperrt werden kann.

Das Injektionselement 58, das Auslassventil 114 und der Fluidbehälter 106 bilden vorzugsweise eine vormontierte Injektionseinheit 118 der Vorrichtung 10, um deren Montage zu erleichtern. Bei schadhafter Injektionseinheit 118 kann diese ferner handhabungsfreundlich von der Vorrichtung 10 entfernt und durch eine unbeschädigte Injektionseinheit 118 ersetzt werden.

Die Injektionseinheiten 118 sind identisch ausgestaltet.

Zum Haltern einer Injektionseinheit 118 umfasst die Vorrichtung 10 ein Fixierteil 120, das ebenfalls Bestandteil der Injektionseinheit 118 sein kann. Das Fixierteil 120 weist einen Fixierbereich 122 und einen Stützbereich 124 auf.

In der Platte 96 ist jeweils eine Durchgangsöffnung 126 in Gestalt einer Durchbrechung für eine Injektionseinheit 118 gebildet. Dies ist in der Figur 5 schematisch und vereinfacht dargestellt, wobei ein gestrichelter Pfeil 128 symbolisiert, wie die Injektionseinheit 118 mit dem Injektionselement 58 führend zum Teil durch die Durchgangsöffnung 126 hindurchgeführt werden kann. Die Durchgangsöffnung 126 ist von einem Rand 130 eingefasst.

Der Fixierbereich 122 ist flanschartig ausgestaltet und beispielsweise durch Verschraubung am Rand 130 der Durchgangsöffnung 126 festgelegt. Die Rohrleitung 62 und der Stützbereich 124 durchgreifen die Durchgangsöffnung und sind unterhalb des Haltekörpers 94 positioniert, wohingegen der Fixierbereich 122 an der Oberseite des Haltekörpers 94 angeordnet ist. Das Auslassventil 114 und der Fluidbehälter 106 sind oberhalb des Haltekörpers 94 positioniert (Figuren 4 und 5).

Der Fixierbereich 122 weist ein Stützglied 132 auf, das von der Rohrleitung 62 durchsetzt ist und als Führung für dieselbe dient. Am Stützglied 132 stützt sich ein Rückstellelement 134 auf, das ausgestaltet ist als Schraubenfeder 136. Das dem Stützglied 132 entgegengesetzte Ende der Schraubenfeder 136 stützt sich an einem an der Rohrleitung 62 festgelegten Stützglied 138 ab, für welches seinerseits der Stützbereich 124 als Anschlag dient. Die Schraubenfeder 136 ist dadurch zwischen den vorliegend ringschulterartigen Stützgliedern 132, 138 vorgespannt, und sie kann das Injektionselement 58 mit einer vom Haltekörper 94 wegweisenden Kraft beaufschlagen, wenn das Injektionselement 58 verschoben wird. Die Kraft ist eine Rückstell- und insbesondere Vorspannkraft.

Beim Absenken der Halteeinrichtung 60 ist denkbar, dass das Injektionselement 58 beispielsweise einen Stein im Boden 12 oder auch eine Rohrleitung 22 kontaktiert. Entgegen der Rückstellkraft der Schraubenfeder 136 kann das Injektionselement 58 zum Schutz vor Beschädigung relativ zum Haltekörper 94 verschoben werden. Dabei werden auch das Auslassventil 114 und der Fluidbehälter 106 verschoben. Dies ist von Vorteil, da an den Anschlüssen des Ventilgehäuses 112 keine beweglichen Dichtflächen vorgesehen werden müssen. Durch die starre Verbindung des Injektionselementes 58, des Auslassventils 114 und des Fluidbehälters 106 kann eine dauerhafte Dichtigkeit der Fluidverbindung sichergestellt werden.

Entfällt eine Kraft auf das Injektionselement 58 in Richtung auf den Haltekörper 94, sorgt die Rückstellkraft der Schraubenfeder 136 für eine Rückstellung des Injektionselementes 58 mit daran gehaltenem Auslassventil 114 und Fluidbehälter 106 in die Ausgangslage.

Beim Verschieben des Injektionselementes 58 dient über das Stützglied 132 hinaus ein Führungsglied 140 zur Führung. Das Führungsglied 140 ist vom Stützbereich 124 gebildet. Der Stützbereich 124 weist eine von der Grundform her ungefähr pyramidenstumpfförmige Kontur auf.

Das Halteteil 70 umfasst einen Anlagekörper 142, der unterhalb des Haltekörpers 94 angeordnet und im Abstand zu diesem positioniert ist. Der Haltekörper 142 ist vorliegend als Platte 144 ausgestaltet. Stützteile 146 dienen zur Abstützung des Anlagekörpers 142 am Haltekörper 94. Die Stützteile 146 sind beispielsweise ähnlich Streben ausgestaltet, die quer zur Bearbeitungsrichtung 38 verlaufen können und im Querschnitt trapezförmig sind.

Darüber hinaus ist der Anlagekörper 142 an den Vertikalträgern 92 des Rahmens 90 gehalten. Die Stützteile 146 und die Stützbereiche 124 sowie die Schraubenfedern 136 sind in einem Zwischenraum zwischen dem Haltekörper 94 und dem Anlagekörper 142 angeordnet.

Die Rohrleitungen 62 durchgreifen den Anlagekörper 142, so dass die Düsen 64 unterhalb desselben angeordnet sind. Untenseitig ist am Anlagekörper 142 ein Dichtelement 148 angeordnet. Das Dichtelement 148 verläuft beispielsweise entlang eines Außenrandes des Anlagekörpers 142 und fasst die den Anlagekörper 142 durchgreifenden Rohrleitungen 62 ein. Vorzugsweise ist das Dichtelement 148 ein zusammendrückbarer Dichtwulst.

Wenn die Halteeinrichtung 60 abgesenkt ist und die Injektionselemente 58 in den Boden 12 eingreifen, stützt sich der Anlagekörper 142 auf der Bodenfläche 16 ab. Die Entstehung von Unebenheiten der Bodenfläche 16 infolge der Druckluftinjektion wird dadurch vermieden. Das Dichtelement 148 stellt sicher, dass kein Fluid zwischen der Bodenfläche 16 und dem Anlagekörper 142 entweicht. Stattdessen breitet sich die Druckluft im Bodeninneren zur Lockerung des Erdreichs 14 aus.

Es kann wie vorstehend erwähnt vorgesehen sein, dass das Halteteil 70 mit den Injektionselementen 58 vor der Injektion geringfügig angehoben wird, wobei eine Abdichtung über das Dichtelement 148 erzielt werden kann.

Die Vorrichtung 10 wird im Betrieb in der Bearbeitungsrichtung 38 bewegt. Die Steuereinrichtung 54 steuert die Verstelleinrichtung 84 und die Hubeinrichtung 100 wie vorstehend erläutert so, dass sukzessive in der Bearbeitungsrichtung 38 hintereinanderliegende Bearbeitungsbereiche am Boden 12 erfasst werden. Es ist eine quasi-kontinuierliche Bearbeitung des Bodens 12 durch Absenken des Halteteils 70, Verbleiben der Halteeinrichtung 60 ortsfest am Boden 12 unter Bewegung relativ zur Trageinrichtung 24, Anheben des Halteteils 70 und Verschieben der Halteeinrichtung 60 in der Bearbeitungsrichtung 38 möglich.

Die Steuereinrichtung 54 steuert ferner die Befüllventile 110 und die Auslassventile 114. Nach dem Absenken des Halteteils 70 auf die Bodenfläche 16, so dass die Injektionselemente 58 in den Boden 12 eingreifen, betätigt die Steuereinrichtung 54 die Auslassventile 114 zur Freigabe der Fluidverbindung von den Fluidbehältern 106 zu den Injektionselementen 58. Die Druckluft wird in den Boden 12 injiziert. Vorzugsweise erfolgt ein einzelner Druckstoß, wobei die Öffnungszeit der Auslassventile 114 ungefähr 0,1 s beträgt. Der Luftdruck in den Fluidbehältern 106 beträgt ungefähr 7 bar, das Volumen der Fluidbehälter 106 ungefähr 1 I.

Bei der Druckluftinjektion werden die Fluidbehälter 106 nicht entleert, es verbleibt ein Restvolumen an Druckluft mit Überdruck gegenüber der Umgebung. Bezogen auf den Außendruck im Boden 12 beträgt die Druckluftmenge, die in den Boden 12 injiziert wird, ungefähr 2 I bis 4 I.

Während der Druckluftinjektion sind die Befüllleitungen 108 mittels der Befüllventile 110 gesperrt. Nach der Druckluftinjektion sperren die Auslassventile 114 die Fluidverbindung, und die Steuereinrichtung 54 betätigt die Befüllventile 110. Die Befüllleitungen 108 sind dadurch freigegeben, so dass die Fluidbehälter 106 wieder mit Druckluft aus den Vorratsbehältern 46 befüllt werden können. Anschließend werden die Befüllventile 110 geschlossen, und es kann ein neuer Injektionsvorgang bei abermals abgesenktem Halteteil 70 durchgeführt werden.

### Bezugszeichenliste:

- 10: Bodenbehandlungsvorrichtung
- 12: Boden
- 14: Erdreich
- 16: Bodenfläche
- 18: Rasenbewuchs
- 20: Rasenklimatisierungseinrichtung
- 22: Rohrleitung
- 24: Trageinrichtung
- 26: Tragrahmen
- 28: Seitenwand
- 30: Vorderseite
- 32: Kupplungseinrichtung
- 34: Rückseite
- 36: Walze
- 38: Bearbeitungsrichtung
- 40: Fluidbereitstellungseinrichtung
- 42: Förderaggregat
- 44: Zufuhrleitung
- 46: Vorratsbehälter
- 48: Antrieb
- 50: Hydraulikpumpe
- 52: Welle
- 54: Steuereinrichtung
- 56: Steuerleitung
- 58: Injektionselement
- 60: Halteeinrichtung
- 62: Rohrleitung
- 64: Düse
- 66: Düse
- 68: Koppelteil
- 70: Halteteil
- 72: Rahmen
- 74: oberer Querträger
- 76: Vertikalträger
- 78: Rahmen
- 80: Rollen
- 82: Führung
- 84: Verstelleinrichtung
- 86: Kolben-Zylinder-Aggregat
- 88: Hydraulikleitung
- 90: Rahmen
- 92: Vertikalträger
- 94: Haltekörper
- 96: Platte
- 98: Rahmen
- 100: Hubeinrichtung
- 102: Kolben-Zylinder-Aggregat
- 104: Hydraulikleitung
- 106: Fluidbehälter
- 108: Befüllleitung
- 110: Befüllventil
- 112: Ventilgehäuse
- 114: Auslassventil
- 116: Steuerleitung
- 118: Injektionseinheit
- 120: Fixierteil
- 122: Fixierbereich
- 124: Stützbereich
- 126: Durchgangsöffnung
- 128: Pfeil
- 130: Rand
- 132: Stützglied
- 134: Rückstellelement
- 136: Schraubenfeder
- 138: Stützglied
- 140: Führungsglied
- 142: Anlagekörper
- 144: Platte
- 146: Stützteil
- 148: Dichtelement

## Patentansprüche

1. Bodenbehandlungsvorrichtung zur Bodenlockerung insbesondere bei Böden (12) mit Rasenbewuchs, speziell Böden (12) von Sport- oder Freizeitanlagen, umfassend:
- eine Trageinrichtung (24),
- eine daran gehaltene Halteeinrichtung (60) mit einer Mehrzahl von Injektionselementen (58),
- eine Fluidbereitstellungseinrichtung (40), die mit den Injektionselementen (58) in Fluidverbindung steht,
- eine Hubeinrichtung (100), über die die Injektionselemente (58) in den Boden (12) einführbar und aus diesem herausziehbar sind,
- eine Mehrzahl von Fluidbehältern (106), die zur Beaufschlagung mit einem Fluid, insbesondere einem Gas oder einem Gasgemisch, mit der Fluidbereitstellungseinrichtung (40) in Fluidverbindung stehen,
- und eine Ventileinrichtung mit einer Mehrzahl von Auslassventilen (114),
wobei die Bodenbehandlungsvorrichtung (10) vormontierte Injektionseinheiten (118) aufweist, die jeweils einen Fluidbehälter (106), ein Auslassventil (114) und ein dem Fluidbehälter (106) zugeordnetes Injektionselement (58) umfassen oder durch diese gebildet sind,
wobei ein jeweiliges Auslassventil (114) ein Ventilgehäuse (112) aufweist, an dessen Eingangsseite der jeweilige Fluidbehälter (106) angeschlossen ist und an dessen Ausgangsseite das jeweilige Injektionselement (58) angeschlossen dadurch mit dem Fluidbehälter (106) in einer Fluidverbindung steht, wobei die Fluidverbindung mittels eines jeweiligen Auslassventils (114) wahlweise freigebbar oder sperrbar ist,
wobei der Fluidbehälter (106), das Auslassventil (114) und das Injektionselement (58) starr miteinander verbunden sind,
und wobei die Bodenbehandlungsvorrichtung (10) eine Steuereinrichtung (54) umfasst, die die Auslassventile (114) zur Freigabe der jeweiligen Fluidverbindung bei in den Boden (12) eingeführten Injektionselementen (58) ansteuert.

2. Bodenbehandlungsvorrichtung nach Anspruch 1, **dadurch gekennzeichnet, dass** ein jeweiliger Fluidbehälter (106) mit maximal fünf Injektionselementen (58) in Fluidverbindung steht, vorzugsweise mit maximal drei Injektionselementen (58), und/oder dass ein jeweiliger Fluidbehälter (106) mit genau einem Injektionselement (58) in Fluidverbindung steht.

3. Bodenbehandlungsvorrichtung nach einem der voranstehenden Ansprüche, **dadurch gekennzeichnet, dass** die Injektionselemente (58) Rohrleitungen (62) mit endseitig angeordneten Düsen (64; 66) sind oder umfassen, und/oder dass ein jeweiliger Fluidbehälter (106) in geradliniger Richtung mit einer Düse (64; 66) am Ausgang des jeweiligen Injektionselementes (58) und insbesondere genau einen Injektionselementes (58) verbunden ist.

4. Bodenbehandlungsvorrichtung nach einem der voranstehenden Ansprüche, **dadurch gekennzeichnet, dass** die Bodenbehandlungsvorrichtung (10) frei von Schlauchleitungen ist zur Verbindung eines jeweiligen Fluidbehälters (106) mit dem jeweiligen mindestens einen Injektionselement (58).

5. Bodenbehandlungsvorrichtung nach einem der voranstehenden Ansprüche, **dadurch gekennzeichnet, dass** die Injektionseinheiten (118) mit der Halteeinrichtung (60) lösbar verbindbar sind.

6. Bodenbehandlungsvorrichtung nach einem der voranstehenden Ansprüche, **dadurch gekennzeichnet, dass** die Fluidbereitstellungseinrichtung (40) mindestens einen Vorratsbehälter (46) aufweist sowie ein Förderaggregat (42) zum Fördern von Fluid in den mindestens einen Vorratsbehälter (46), wobei der mindestens eine Vorratsbehälter (46) mit den Fluidbehältern (106) über mindestens eine Befüllleitung (108) in Fluidverbindung steht und die Ventileinrichtung mindestens ein Befüllventil (110) umfasst, mit dem die mindestens eine Befüllleitung (108) wahlweise freigebbar und sperrbar ist.

7. Bodenbehandlungsvorrichtung nach Anspruch 6, **dadurch gekennzeichnet, dass** das mindestens eine Befüllventil (110) von der Steuereinrichtung (54) ansteuerbar ist, wobei die Steuereinrichtung (54) das mindestens eine Befüllventil (110) zum Sperren der mindestens einen Befüllleitung (108) ansteuert, wenn die Auslassventile (114) die Fluidverbindung von den Fluidbehältern (106) zu den Injektionselementen (58) freigeben, und dass die Steuereinrichtung (54) das mindestens eine Befüllventil (110) zum zumindest zeitweisen Freigeben der mindestens einen Befüllleitung (108) und Beaufschlagen der Fluidbehälter (106) mit Fluid ansteuert, wenn die Auslassventile (114) die Fluidverbindung von den Fluidbehältern (106) zu den Injektionselementen (58) sperren.

8. Bodenbehandlungsvorrichtung nach einem der voranstehenden Ansprüche, **dadurch gekennzeichnet, dass** die Halteeinrichtung (60) ein Koppelteil (68) aufweist und ein Halteteil (70), wobei die Halteeinrichtung (60) über das Koppelteil (68) an der Trageinrichtung (24) gehalten ist und die Injektionselemente (58) am Halteteil (70) gehalten sind.

9. Bodenbehandlungsvorrichtung nach Anspruch 8, **dadurch gekennzeichnet, dass** die Bodenbehandlungsvorrichtung (10) eine Verstelleinrichtung (84) umfasst, über die das Koppelteil (68) relativ zur Trageinrichtung (24) längs einer Bearbeitungsrichtung (38) der Bodenbehandlungsvorrichtung (10) beweglich ist, und/oder dass das Halteteil (70) relativ zum Koppelteil (68) über die Hubeinrichtung (100) anhebbar und absenkbar ist.

10. Bodenbehandlungsvorrichtung nach einem der voranstehenden Ansprüche, **dadurch gekennzeichnet, dass** die Verstelleinrichtung (84) und/oder die Hubeinrichtung (100) hydraulisch ausgestaltet sind und dass die Bodenbehandlungsvorrichtung eine Hydraulikpumpe (50) aufweist zum Bereitstellen von Hydraulikflüssigkeit für die Verstelleinrichtung (84) und/oder die Hubeinrichtung (100), oder dass die Verstelleinrichtung (84) und/oder die Hubeinrichtung (100) pneumatisch, mechanisch oder elektrisch ausgestaltet sind.

11. Bodenbehandlungsvorrichtung nach einem der voranstehenden Ansprüche, **dadurch gekennzeichnet, dass** die Halteeinrichtung (60), insbesondere das Halteteil (70), einen Haltekörper (94) aufweist, an dem die Injektionselemente (58) mittels Fixierteilen (120) festgelegt sind, wobei die Auslassventile (114) und die Fluidbehälter (106) vorzugsweise oberhalb des Haltekörpers (94) angeordnet sind.

12. Bodenbehandlungsvorrichtung nach Anspruch 11, **dadurch gekennzeichnet, dass** die Injektionselemente (58) Durchgangsöffnungen (126) des Haltekörpers (94) durchgreifen, wobei ein jeweiliges Injektionselement (58) mit einem Fixierteil (120) an einem Rand (130) einer jeweiligen Durchgangsöffnung (126) festgelegt ist.

13. Bodenbehandlungsvorrichtung nach Anspruch 11 oder 12, **dadurch gekennzeichnet, dass** die Injektionselemente (58) entgegen der Rückstellkraft sie vom Haltekörper (94) weg beaufschlagender Rückstellelemente (134) relativ zum Haltekörper (94) verschieblich sind, wobei die Fixierteile (120) eine Führung für die Injektionselemente (58) ausbilden, wobei der Fluidbehälter (106) und das Auslassventil (114) zusammen mit dem mindestens einen Injektionselement (58) verschiebbar ist.

14. Bodenbehandlungsvorrichtung nach einem der Ansprüche 11 bis 13 in Verbindung mit Anspruch 5, **dadurch gekennzeichnet, dass** die Injektionseinheiten (118) ein Fixierteil (120) umfassen.

15. Bodenbehandlungsvorrichtung nach einem der voranstehenden Ansprüche, **dadurch gekennzeichnet, dass** die Bodenbehandlungsvorrichtung (10) mindestens einen Anlagekörper (142) zum Anliegen an der Bodenfläche (16) aufweist, wobei ein jeweiliges Injektionselement (58) einen Anlagekörper (142) durchgreift, und wobei der mindestens eine Anlagekörper (142) mindestens ein Dichtelement (148) umfasst oder ein solches am Anlagekörper (142) angeordnet ist, das das jeweilige Injektionselement (58) einfasst, insbesondere **gekennzeichnet durch** einen Anlagekörper (142), den alle Injektionselemente (58) durchgreifen, sowie ein Dichtelement (148), das alle Injektionselemente (58) einfasst.

16. Bodenbehandlungsvorrichtung nach Anspruch 15 in Verbindung mit einem der Ansprüche 11 bis 14, **dadurch gekennzeichnet, dass** der mindestens eine Anlagekörper (142) im Abstand zum Haltekörper (94) positioniert ist und sich über Stützteile (146) am Haltekörper (94) abstützt, wobei die Injektionselemente (58) einen Zwischenraum zwischen dem mindestens einen Anlagekörper (142) und dem Haltekörper (94) durchgreifen.

17. Bodenbehandlungsvorrichtung nach einem der Ansprüche 11 bis 16, **dadurch gekennzeichnet, dass** der Haltekörper (94) und/oder der mindestens eine Anlagekörper (142) zumindest bereichsweise plattenförmig ausgestaltet sind.

18. Bodenbehandlungsvorrichtung nach einem der voranstehenden Ansprüche, **dadurch gekennzeichnet, dass** zumindest eines der Folgenden gilt:
- die Steuereinrichtung (54) steuert die Auslassventile (114) an zum Ausführen nur eines Fluidstoßes durch die Injektionselemente (58);
- die Steuereinrichtung (54) steuert die Auslassventile (114) an zur Freigabe der Fluidverbindung für ungefähr 0,05 s bis 0,5 s, vorzugsweise ungefähr 0,1 s bis 0,2 s;
- die Fluidbehälter (106) weisen ein Volumen von ungefähr 0,25 I bis 2 I auf, vorzugsweise von ungefähr 0,5 I bis 1,5 I;
- die Fluidbereitstellungseinrichtung (40) ist derart ausgestaltet, dass ein Fluiddruck von ungefähr 5 bar bis 10 bar in den Fluidbehältern (106) bereitstellbar ist, vorzugsweise ungefähr 7 bar bis 8 bar;
- die Bodenbehandlungsvorrichtung (10) umfasst eine Kupplungseinrichtung (32) zum Anschließen an ein Zugfahrzeug;
- die Bodenbehandlungsvorrichtung (10) ist selbstfahrend und selbstlenkend ausgestaltet.

## Claims

1. Ground treatment apparatus for loosening ground, in particular in the case of ground (12) with grass growth, specifically ground (12) of sport or leisure facilities, comprising:
- a support device (24),
- a holding device (60) held thereon having a plurality of injection elements (58),
- a fluid providing device (40) which is in fluidic connection with the injection elements (58),
- a lifting device (100) by way of which the injection elements (58) are insertible into the ground (12) and are extractable therefrom,
- a plurality of fluid containers (106) which are in fluidic connection with the fluid providing device (40) for acting with fluid, in particular with a gas or gas mixture,
- and a valve device having a plurality of outlet valves (114),
wherein the ground treatment apparatus (10) has preassembled injection units (118) which each comprise or are formed by a fluid container (106), an outlet valve (114), and an injection element (58) associated with the fluid container (106),
wherein a respective outlet valve (114) has a valve housing (112) to the entry side of which the respective fluid container (106) is connected, and to the exit side of which the respective injection element (58) is connected and is in a fluidic connection thereby with the fluid container (106), wherein the fluidic connection is optionally releasable or blockable by means of a respective outlet valve (114), wherein the fluid container (106), the outlet valve (114), and the injection element (58) are rigidly connected to each other,
and wherein the ground treatment apparatus (10) comprises a control device (54) which operates the outlet valves (114) to release the respective fluidic connection when the injection elements (58) are inserted into the ground (12).

2. Ground treatment apparatus in accordance with Claim 1, **characterized in that** a respective fluid container (106) is in fluidic connection with at most five injection elements (58), preferably with at most three injection elements (58), and/or a respective fluid container (106) is in fluidic connection with exactly one injection element (58).

3. Ground treatment apparatus in accordance with any one of the preceding Claims, **characterized in that** the injection elements (58) are or comprise pipe conduits (62) with nozzles (64; 66) arranged on the ends, and/or a respective fluid container (106) is connected in linear direction to a nozzle (64; 66) at the exit of the respective injection element (58) and in particular exactly one injection element (58).

4. Ground treatment apparatus in accordance with any one of the preceding Claims, **characterized in that** the ground treatment apparatus (10) is free of hose conduits for connecting a respective fluid container (106) to the respective at least one injection element (58).

5. Ground treatment apparatus in accordance with any one of the preceding Claims, **characterized in that** the injection units (118) are detachably connectable to the holding device (60).

6. Ground treatment apparatus in accordance with any one of the preceding Claims, **characterized in that** the fluid providing device (40) has at least one reservoir (46) as well as a conveying assembly (42) for conveying fluid into the at least one reservoir (46), wherein the at least one reservoir (46) is in fluidic connection with the fluid containers (106) by way of at least one filling conduit (108) and the valve device comprises at least one filling valve (110) with which the at least one filling conduit (108) is selectively releasable and blockable.

7. Ground treatment apparatus in accordance with Claim 6, **characterized in that** the at least one filling valve (110) is controllable by the control device (54), wherein the control device (54) controls the at least one filling valve (110) to block the at least one filling conduit (108) when the outlet valves (114) release the fluidic connection from the fluid containers (106) to the injection elements (58), and **in that** the control device (54) controls the at least one filling valve (110) to at least temporarily release the at least one filling conduit (108) and act upon the fluid containers (106) with fluid when the outlet valves (114) block the fluidic connection from the fluid containers (106) to the injection elements (58).

8. Ground treatment apparatus in accordance with any one of the preceding Claims, **characterized in that** the holding device (60) has a coupling part (68) and a holding part (70), wherein the holding device (60) is held on the support device (24) by the coupling part (68) and the injection elements (58) are held on the holding part (70).

9. Ground treatment apparatus in accordance with Claim 8, **characterized in that** the ground treatment apparatus (10) comprises an adjustment device (84) by way of which the coupling part (68) is moveable relative to the support device (24) along a working direction (38) of the ground treatment apparatus (10), and/or the holding part (70) is raisable and lowerable relative to the coupling part (68) by way of the lifting device (100).

10. Ground treatment apparatus in accordance with any one of the preceding Claims, **characterized in that** the adjustment device (84) and/or the lifting device (100) are of hydraulic configuration, and **in that** the ground treatment apparatus has a hydraulic pump (50) for providing hydraulic liquid for the adjustment device (84) and/or the lifting device (100), or **in that** the adjustment device (84) and/or the lifting device (100) are of pneumatic, mechanical or electrical configuration.

11. Ground treatment apparatus in accordance with any one of the preceding Claims, **characterized in that** the holding device (60), in particular the holding part (70), has a holding body (94) on which the injection elements (58) are fixed by means of fixing parts (120), wherein the outlet valves (114) and the fluid containers (106) are preferably arranged above the holding body (94).

12. Ground treatment apparatus in accordance with Claim 11, **characterized in that** the injection elements (58) pass through through-openings (126) of the holding body (94), wherein a respective injection element (58) is fixed with a fixing part (120) on a rim (130) of a respective through-opening (126).

13. Ground treatment apparatus in accordance with Claim 11 or 12, **characterized in that** the injection elements (58) are displaceable relative to the holding body (94) counter to the restoring force of restoring elements acting upon them away from the holding body (94), wherein the fixing parts (120) form a guide for the injection elements (58), wherein the fluid container (106) and the outlet valve (114) are displaceable together with the at least one injection element (58).

14. Ground treatment apparatus in accordance with any one of Claims 11 to 13 in connection with Claim 5, **characterized in that** the injection units (118) comprise a fixing part (120).

15. Ground treatment apparatus in accordance with any one of the preceding Claims, **characterized in that** the ground treatment apparatus (10) has at least one abutment body (142) for abutment on the ground surface (16), wherein a respective injection element (58) passes through an abutment body (142), and wherein the at least one abutment body (142) comprises at least one sealing element (148) or such a sealing element (148) is arranged on the abutment body (142), which encloses the respective injection element (58), in particular **characterized by** an abutment body (142) through which all injection elements (58) pass, as well as a sealing element (148) which encloses all injection elements (58).

16. Ground treatment apparatus in accordance with Claim 15 in connection with any one of Claims 11 to 14, **characterized in that** the at least one abutment body (142) is positioned at a distance from the holding body (94) and is supported on the holding body (94) by supporting parts (146), wherein the injection elements (58) pass through an intermediate space between the at least one abutment body (142) and the holding body (94).

17. Ground treatment apparatus in accordance with any one of Claims 11 to 16, **characterized in that** the holding body (94) and/or the at least one abutment body (142) are configured to be plate-shaped at least in regions.

18. Ground treatment apparatus in accordance with any one of the preceding Claims, **characterized in that** at least one of the following applies:
- the control device (54) controls the outlet valves (114) for executing only one fluid pulse through the injection elements (58);
- the control device (54) controls the outlet valves (114) for releasing the fluidic connection for about 0.05 s to 0.5 s, preferably about 0.1 s to 0.2 s;
- the fluid containers (106) have a volume of about 0.25 L to 2 L, preferably of about 0.5 L to 1.5 L;
- the fluid providing device (40) is configured in such a way that a fluid pressure of about 5 bar to 10 bar is providable in the fluid containers (106), preferably about 7 bar to 8 bar;
- the ground treatment apparatus (10) comprises a coupling device (32) for connecting to a traction vehicle;
- the ground treatment apparatus (10) is configured to be self-propelled and self-steering.

## Revendications

1. Dispositif de traitement du sol pour l'ameublissement du sol notamment pour des sols (12) avec une couverture végétale, en particulier des sols (12) d'installations sportives ou de loisirs, comprenant :
- un système de support (24),
- un système de retenue (60) retenu sur celui-ci avec une pluralité d'éléments d'injection (58),
- un système de fourniture de fluide (40), qui est en liaison fluidique avec les éléments d'injection (58),
- un système de levage (100), par l'intermédiaire duquel les éléments d'injection (58) peuvent être introduits dans le sol (12) et peuvent en être retirés,
- une pluralité de réservoirs de fluide (106), qui pour être alimentés avec un fluide, en particulier un gaz ou un mélange de gaz, sont en liaison fluidique avec le système de fourniture de fluide (40),
- et un système de soupape avec une pluralité de soupapes d'évacuation (114),
dans lequel le dispositif de traitement du sol (10) présente des unités d'injection (118) préassemblées, qui comprennent respectivement un réservoir de fluide (106), une soupape d'évacuation (114) et un élément d'injection (58) associé au réservoir de fluide (106) ou sont formées par ceux-ci,
dans lequel une soupape d'évacuation (114) respective présente un carter de soupape (112), au côté d'entrée duquel le réservoir de fluide (106) respectif est raccordé et au côté de sortie duquel l'élément d'injection (58) respectif raccordé est ainsi en liaison fluidique avec le réservoir de fluide (106), dans lequel la liaison fluidique peut être libérée ou bloquée sélectivement au moyen d'une soupape d'évacuation (114) respective,
dans lequel le réservoir de fluide (106), la soupape d'évacuation (114) et l'élément d'injection (58) sont reliés rigidement les uns aux autres,
et dans lequel le dispositif de traitement du sol (10) comprend un système de commande (54), qui commande les soupapes d'évacuation (114) pour la libération de la liaison fluidique respective lorsque les éléments d'injection (58) sont introduits dans le sol (12).

2. Dispositif de traitement du sol selon la revendication 1, **caractérisé en ce qu'**un réservoir de fluide (106) respectif est en liaison fluidique avec au maximum cinq éléments d'injection (58), de préférence avec au maximum trois éléments d'injection (58), et/ou qu'un réservoir de fluide (106) respectif est en liaison fluidique avec un seul élément d'injection (58).

3. Dispositif de traitement du sol selon l'une quelconque des revendications précédentes, **caractérisé en ce que** les éléments d'injection (58) sont ou comprennent des conduites (62) avec des buses (64 ; 66) disposées côté extrémité, et/ou qu'un réservoir de fluide (106) respectif est relié dans une direction rectiligne à une buse (64 ; 66) à la sortie de l'élément d'injection (58) respectif et en particulier d'un seul élément d'injection (58).

4. Dispositif de traitement du sol selon l'une quelconque des revendications précédentes, **caractérisé en ce que** le dispositif de traitement du sol (10) est exempt de tuyaux pour la liaison d'un réservoir de fluide (106) respectif au au moins un élément d'injection (58) respectif.

5. Dispositif de traitement du sol selon l'une quelconque des revendications précédentes, **caractérisé en ce que** les unités d'injection (118) peuvent être reliées au système de retenue (60) de manière détachable.

6. Dispositif de traitement du sol selon l'une quelconque des revendications précédentes, **caractérisé en ce que** le système de fourniture de fluide (40) présente au moins un réservoir de stockage (46) ainsi qu'un groupe de transport (42) pour le transport de fluide dans le au moins un réservoir de stockage (46), dans lequel le au moins un réservoir de stockage (46) est en liaison fluidique avec les réservoirs de fluide (106) par l'intermédiaire d'au moins une conduite de remplissage (108) et le système de soupape comprend au moins une soupape de remplissage (110), avec laquelle la au moins une conduite de remplissage (108) peut être sélectivement libérée et bloquée.

7. Dispositif de traitement du sol selon la revendication 6, **caractérisé en ce que** la au moins une soupape de remplissage (110) peut être commandée par le système de commande (54), dans lequel le système de commande (54) commande la au moins une soupape de remplissage (110) pour le blocage de la au moins une conduite de remplissage (108), lorsque les soupapes d'évacuation (114) libèrent la liaison fluidique des réservoirs de fluide (106) aux éléments d'injection (58), et que le système de commande (54) commande la au moins une soupape de remplissage (110) pour la libération au moins temporaire de la au moins une conduite de remplissage (108) et l'alimentation des réservoirs de fluide (106) en fluide, lorsque les soupapes d'évacuation (114) bloquent la liaison fluidique des réservoirs de fluide (106) aux éléments d'injection (58).

8. Dispositif de traitement du sol selon l'une quelconque des revendications précédentes, **caractérisé en ce que** le système de retenue (60) présente une partie d'accouplement (68) et une partie de retenue (70), dans lequel le système de retenue (60) est retenu sur le système de support (24) par l'intermédiaire de la partie d'accouplement (68) et les éléments d'injection (58) sont retenus sur la partie de retenue (70).

9. Dispositif de traitement du sol selon la revendication 8, **caractérisé en ce que** le dispositif de traitement du sol (10) comprend un système de déplacement (84), par l'intermédiaire duquel la partie d'accouplement (68) est mobile par rapport au système de support (24) le long d'une direction de travail (38) du dispositif de traitement du sol (10), et/ou que la partie de retenue (70) peut être levée et baissée par rapport à la partie d'accouplement (68) par l'intermédiaire du système de levage (100).

10. Dispositif de traitement du sol selon l'une quelconque des revendications précédentes, **caractérisé en ce que** le système de déplacement (84) et/ou le système de levage (100) sont conçus de manière hydraulique et que le dispositif de traitement du sol présente une pompe hydraulique (50) pour la fourniture de liquide hydraulique pour le système de déplacement (84) et/ou le système de levage (100), ou que le système de déplacement (84) et/ou le système de levage (100) sont conçus de manière pneumatique, mécanique ou électrique.

11. Dispositif de traitement du sol selon l'une quelconque des revendications précédentes, **caractérisé en ce que** le système de retenue (60), en particulier la partie de retenue (70), présente un corps de retenue (94), sur lequel les éléments d'injection (58) sont fixés au moyen de pièces de fixation (120), dans lequel les soupapes d'évacuation (114) et les réservoirs de fluide (106) sont disposés de préférence au-dessus du corps de retenue (94).

12. Dispositif de traitement du sol selon la revendication 11, **caractérisé en ce que** les éléments d'injection (58) traversent des ouvertures de passage (126) du corps de retenue (94), dans lequel un élément d'injection (58) respectif est fixé avec une pièce de fixation (120) sur un bord (130) d'une ouverture de passage (126) respective.

13. Dispositif de traitement du sol selon la revendication 11 ou 12, **caractérisé en ce que** les éléments d'injection (58) sont coulissants par rapport au corps de retenue (94) à l'encontre de la force de rappel d'éléments de rappel (134) les sollicitant à l'écart du corps de retenue (94), dans lequel les pièces de fixation (120) réalisent un guidage pour les éléments d'injection (58), dans lequel le réservoir de fluide (106) et la soupape d'évacuation (114) peut coulisser conjointement avec le au moins un élément d'injection (58).

14. Dispositif de traitement du sol selon l'une quelconque des revendications 11 à 13 en liaison avec la revendication 5, **caractérisé en ce que** les unités d'injection (118) comprennent une pièce de fixation (120).

15. Dispositif de traitement du sol selon l'une quelconque des revendications précédentes, **caractérisé en ce que** le dispositif de traitement du sol (10) présente au moins un corps d'appui (142) pour l'appui sur la surface du sol (16), dans lequel un élément d'injection (58) respectif traverse un corps d'appui (142), et dans lequel le au moins un corps d'appui (142) comprend au moins un élément d'étanchéité (148) ou un tel est disposé sur le corps d'appui (142), qui borde l'élément d'injection (58) respectif, en particulier **caractérisé par** un corps d'appui (142), que tous les éléments d'injection (58) traversent, ainsi qu'un élément d'étanchéité (148), qui borde tous les éléments d'injection (58).

16. Dispositif de traitement du sol selon la revendication 15 en liaison avec une des revendications 11 à 14, **caractérisé en ce que** le au moins un corps d'appui (142) est positionné à distance du corps de retenue (94) et s'appuie par l'intermédiaire de pièces de soutien (146) sur le corps de retenue (94), dans lequel les éléments d'injection (58) traversent un espace intermédiaire entre le au moins un corps d'appui (142) et le corps de retenue (94).

17. Dispositif de traitement du sol selon l'une quelconque des revendications 11 à 16, **caractérisé en ce que** le corps de retenue (94) et/ou le au moins un corps d'appui (142) sont conçus en forme de plaques au moins par endroits.

18. Dispositif de traitement du sol selon l'une quelconque des revendications précédentes, **caractérisé en ce qu'**au moins un de ce qui suit s'applique :
- le système de commande (54) commande les soupapes d'évacuation (114) pour l'exécution d'une seule impulsion de fluide par les éléments d'injection (58) ;
- le système de commande (54) commande les soupapes d'évacuation (114) pour la libération de la liaison fluidique pendant environ 0,05 s à 0,5 s, de préférence environ 0,1 s à 0,2 s ;
- les réservoirs de fluide (106) présentent un volume d'environ 0,25 l à 2 l, de préférence d'environ 0,5 l à 1,5 l ;
- le système de fourniture de fluide (40) est conçu de telle sorte qu'une pression de fluide d'environ 5 bar à 10 bar dans les réservoirs de fluide (106) peut être fournie, de préférence d'environ 7 bar à 8 bar ;
- le dispositif de traitement du sol (10) comprend un système d'accouplement (32) pour le raccordement à un véhicule tracteur ;
- le dispositif de traitement du sol (10) est conçu de manière automotrice et autodirectrice.
